# EUROPÄISCHE PATENTSCHRIFT

(11) **EP 0 466 953 B1**
(45) Veröffentlichungstag und Bekanntmachung des Hinweises auf die Patenterteilung: **19.10.1994**
(21) Anmeldenummer: 90113655.6
(22) Anmeldetag: 17.07.1990
(51) Int. Cl.: B41B 25/00, B41B 23/00, B41B 19/00, G06K 15/02

(54) **Verfahren zur Erstellung eines ausgeglichenen Satzbildes**
Process for building a compensated typographic aspect
Procédé pour établir un aspect typographique compensé

(43) Veröffentlichungstag der Anmeldung: 22.01.1992
(73) Patentinhaber: URW Software & Type GmbH, D-22399 Hamburg (DE)
(72) Erfinder: Zapf, Hermann, D-6100 Darmstadt (DE)
(74) Vertreter: UEXKÜLL & STOLBERG

(56) Entgegenhaltungen:
- EP-A- 0 050 786
- US-A- 4 833 627
- COMMUNICATIONS OF THE ASSOCIATION OF COMPUTING MACHINERY, Band 25, Nr. 8,August 1982, Seiten 564-571, New York, US; H. SAMET: "Heuristics for the line division problem in computer justified text"

## Beschreibung

Die Erfindung betrifft ein Verfahren zur Erstellung eines ausgeglichenen Satzbildes nach dem Oberbegriff des Patentanspruchs 1.

Gedruckte Texte in Büchern, Zeitungen und Zeitschriften werden üblicherweise im sogenannten "Blocksatz" gesetzt, bei dem alle Zeilen gleich lang sind. Das einfachste und bei weitem am häufigsten angewendete Verfahren zur Erstellung vom "Blocksatz" ist der sogenannte "sequentielle Zeilenumbruch", bei dem für eine Zeile nach der anderen die günstigste Zeilenumbruchstelle ermittelt wird - gegebenenfalls soweit notwending mit Silbentrennung am Zeilenende - worauf die so ermittelten Zeilen dann durch Veränderung der Wortabstände auf die gewünschte Länge gebracht werden. In anspruchsvollen Druckwerken beträgt der Sollwert des Wortabstandes ein Drittel der Schriftgröße (Kegelhöhe) und weicht höchstens um ein Sechstel der Kegelhöhe nach oben von diesem Sollwert ab, was bisher häufig nur durch mühsame Textänderungen erreicht werden kann. Im Zeitungs- und Magazinsatz werden gleiche Zeilenlängen nur automatisch erzeugt und deshalb oft nur durch sehr große und unschöne Abstände erreicht, die den Lesefluß erheblich stören.

Eine Verbesserung des Satzbildes, nämlich gleichmäßigere Verteilung des durchschnittlichen Grautones über die Fläche des gedruckten Textes, ohne daß Textänderungen notwendig werden, wird durch den "absatzweisen Zeilenumbruch mit Rückblick" erzielt. Bei diesem werden absatzweise für alle Zeilen alle durch eine vorgegebene maximal und minimal zulässige Länge der Wortzwischenräume gegebenen Möglichkeiten des Zeilenaufbaus und deren Auswirkungen auf die nachfolgenden und vorangehenden Zeilen untersucht und bewertet. Die Bewertung steht in der Zuteilung von Strafpunkten, deren Zahl unter anderem umso größer ist, je mehr die Wortzwischenräume von ihrem Sollwert abweichen, je mehr Trennungen - insbesondere in aufeinanderfolgenden Zeilen - notwendig sind und je mehr die Größe der Wortzwischenräume in aufeinanderfolgenden Zeilen voneinander abweicht. Dieses Verfahren ist unter Leitung von Donald Knuth an der Universität Stanford entwickelt worden (D.E.Knuth: TEX, a systeme for technical text, Stanford Artificial Intelligence Laboratory Memo AIM-317.3/ Computer Science Department Report No. STAN-CS-78-675, September 1979).

Aus US-A 4 833 627 ist ein computergestützes Satzkorrektursystem bekannt, das ausgehend von dem Ergebnis herkömmlicher Satzprogramme die gesetzten Zeilen nach bestimmten Zeichenpaaren absucht, um die Konturen der Zeichen dieser Zeichenpaare nach vorgegebenen Gesichtspunkten zu verändern, damit der visuelle Eindruck des Zeichenpaares und damit letztlich des Textes insgesamt in Hinblick auf gute Typographie verbessert wird. Zu den angewendeten Korrekturen der Konturen gehören die Modifikation von Serifen, die Variation von Zeichenabständen bestimmter Zeichenpaare und von Strichstärken bei bestimmten Zeichenpaaren.

Es ist Aufgabe der vorliegenden Erfindung, eine deutliche Verbesserung des einleitend genannten Satzverfahrens, durch welche die Satzqualität noch zusätzlich erhöht wird, zu schaffen.

Zur Lösung dieser Aufgabe dient ein Verfahren zum Erstellen eines ästhetisch ausgeglichenen Satzbildes durch Einstellen der Zeilenlängen mittels Einschieben von Leerstellen zwischen die Worte und Auswertung verschiedener Alternativen auf die Bewertung aller Zeilen eines Absatzes durch Zuteilung einer umso höheren Strafpunktezahl je mehr die Zeilen gestaucht oder gestreckt werden müssen, **dadurch gekennzeichnet**, daß
ständig oder fallweise unter Konstanthaltung der Strichstärke auf elektronischem Wege kondensierte und/oder expandierte Zeichen gegebenenfalls neben normalen zur Entlastung der Wortzwischenräume verwendet werden,
gegenüber den normalen Kerning-Abständen weitere Kerning-Abstände verwendet werden, wenn eine Zeile zu kurz ist, und engere Kerning-Abstände, wenn die Zeile zu lang ist,
beim Ermitteln der optimalen Zeilenumbruchstellen bereits berücksichtigt wird, daß expandierte und kondensierte Zeichenvarianten sowie normale, weitere und engere Kerning-Abstände zur Verfügung stehen.

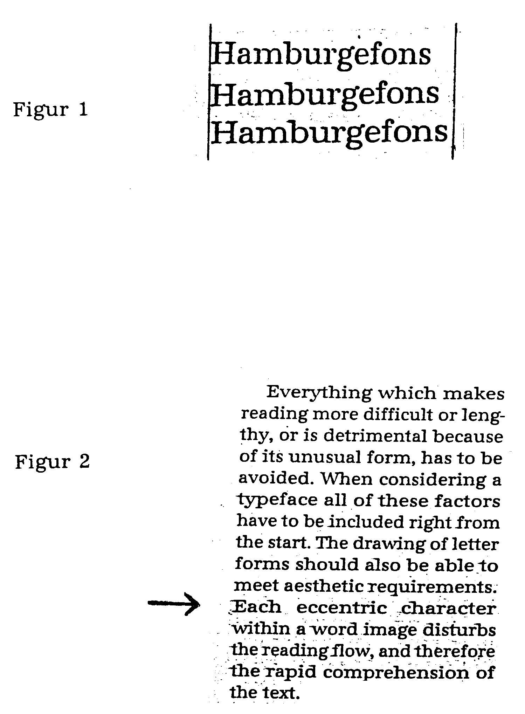

Die erste dieser Maßnahmen besteht in der fallweisen Anwendung von schmaleren (kondensierten) und breiteren (expandierten) Zeichen. Wenn solche schmaleren und breiteren Zeichen typographisch richtig gestaltet sind, dann sind sie beim Lesen kaum von den normal breiten zu unterscheiden, die Breite des Wortes ändert sich jedoch beträchtlich. Figur 1 zeigt dies an dem allgemein üblichen Schrifttestwort "Hamburgefons". Dieses Wort ist in der oberen Zeile mit kondensierten Zeichen, darunter mit normalen und in der letzten Zeile mit expandierten Zeichen gesetzt.

Die Varianten einiger Zeichen fallen mehr auf als die anderer Zeichen. Beispielsweise fällt sowohl beim o als auch beim O die expandierte Form mehr auf als bei m bzw. M. Solche auffälligen Zeichenvarianten werden gemäß einer bevorzugten Ausgestaltung der Erfindung ebenfalls mit einer höheren Strafpunktzahl bewertet als die anderen.

Die Verwendung von unterschiedlich weiten Zeichenvarianten wurde beim früheren Bleisatz in der Praxis nur in großen Schriftgraden im Handsatz angewendet. Dabei standen dem Setzer von einigen Zeichen Varianten zur Verfügung, die bei verschiedenen Gesamtbreiten gleiche Strichstärken in jeder Richtung aufweisen. Beim maschinellen Mengensatz gab es aus technischen Gründen überhaupt keine Möglichkeit verschieden breite Buchstaben einzusetzen.

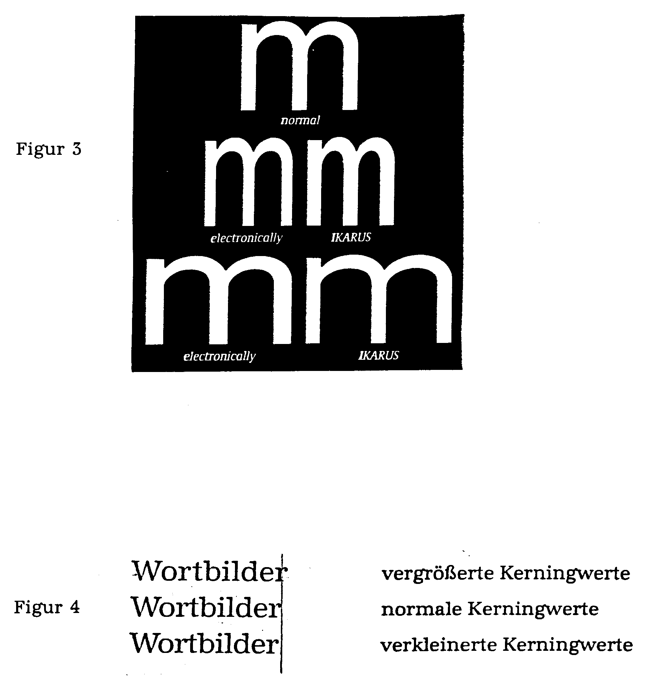

Bei der Übertragung dieser bekannten Maßnahme auf das elektronische Setzen wird bisher der Nachteil in Kauf genommen, daß sich die Expansion und Kondensation in horizontaler Richtung auf alle Buchstaben und auch auf die Balkenstärke auswirkt. Daher erscheinen expandierte Zeichen fett und kondensierte Zeichen mager gedruckt. Deshalb wird diese Maßnahme beim elektronischen Setzen bisher praktisch nur dort angewendet, wo es nicht auf ein gutes Schriftbild ankommt, vor allem beim Zeitungsdruck (vergleiche Figur 2). Figur 3 zeigt ein normales m und links darunter das zugehörige elektronisch kondensierte und expandierte m, jeweils rechts daneben das mit dem System IKARUS typographisch richtig modifizierte m.

Gemäß erstem kennzeichnendem Merkmal des Patentanspruchs 1 werden zur Regulierung der Zeilenlänge keine elektronisch expandierten bzw. kondensierten Zeichen eingesetzt, sondern ausschließlich solche, deren Breite zwar auf elektronischem Wege, aber nach typographischen Gesichtspunkten, unter Konstanthaltung der Strichstärke variiert ist.

Das zweite kennzeichnende Merkmal des Patentanspruchs 1 betrifft die in anderem Zusammenhang bekannte Verwendung gespeicherter Zeichenabstände für jedes Zeichenpaar, wie sie nach einem Vorschlag von P. Karow (Peter Karow: Digital formats for type faces, URW Verlag, Seite 333) in einer sogenannten "Long Kerning-Tabelle" abgelegt sind. Vorzugsweise stehen neben den normalen Zeichenabständen in zwei weiteren Long Kerning-Tabellen sowohl engere als auch weitere Zeichenabstände zur Auswahl. Dabei weichen die engeren und weiteren Zeichenabstände nur für die Zeichenpaare wesentlich von dem normalen Abstand ab bei denen diese Änderung wenig auffällt. Das ist z.B. dann der Fall, wenn der engere bzw. weitere Abstand dem traditionellen entspricht, der sich als Summe von Nachbreite des vorangehenden Vorbreite des nachfolgenden Zeichens ergibt. Zur Entlastung der Wortzwischenräume werden anteilig die normalen Zeichenabstände und die Abstände aus der Long Kerning-Tabelle mit weiteren Abständen gesetzt, wenn die Zeile zu kurz ist, bzw. aus der Long Kerning-Tabelle mit engeren Zeichenabständen, wenn die Zeile zu lang ist (vergleiche Figur 4).

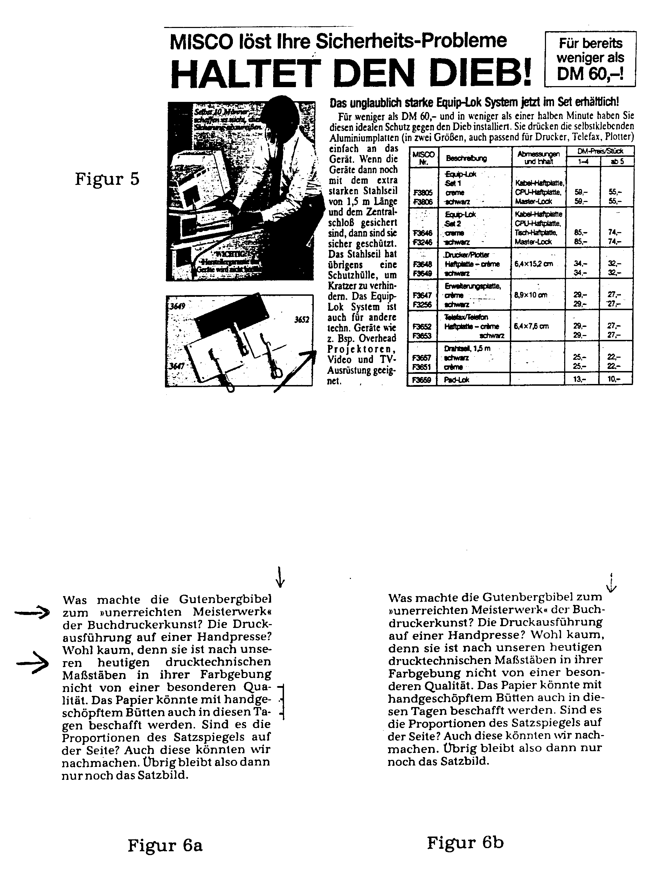

Von dieser Möglichkeit zur Beeinflussung der Zeilenlängen durch nach typographischen Gesichtspunkten veränderte Zeichenabstände wurde bisher kein Gebrauch gemacht. Wenn die Zeichenabstände verändert werden, um den Wortzwischenraum zu entlasten, so betraf diese Änderung bisher alle Abstände in gleicher Weise, was im Extremfall den Eindruck von gesperrt gedruckten Worten erweckt (vergleiche Figur 5).

Gemäß dem dritten kennzeichnenden Merkmal des Patentanspruchs 1 wird bereits beim absatzweisen Ermitteln der optimalen Zeilenumbruchstellen berücksichtigt, daß die gemäß dem ersten und zweiten kennzeichnenden Merkmal vorgesehenen Variationsmöglichkeiten zur Verfügung stehen. Wenn die gemeinsame Anwendung beider genannter Maßnahmen nicht ausreicht, um eine gewünschte Zeilenlänge zu erreichen, kann zusätzlich die gebräuchliste Maßnahme, nämlich Änderung der Wortzwischenräume, angewendet werden.

Gemäß einer bevorzugten Ausgestaltung der Erfindung werden außerdem Trennzeichen, wie Bindestrich, Komma, Satzpunkt und Semikolon sowie einige Buchstaben wie A und T weder vor noch nach dem Zeilenende gesetzt, sondern so, daß sie über den Satzrand zum Teil hinausragen und eine optisch gerade Satzkante entsteht.

Figur 6a zeigt einen Text so, wie er heute durch die DV-Systeme erzeugt und auf dem Papier von Zeitungen oder Magazinen herauskommt. Figur 6b zeigt diesen Text, wie er durch das erfindungsgemäße Verfahren automatisch gestaltet worden ist. Die typographischen Verbesserungen sind offensichtlich, trotzdem durch Pfeile markiert und gekennzeichnet (vergleiche die beiden rechten Satzkanten, Worttrennungen in aufeinanderfolgenden Zeilen, Gleichmäßigkeit der Wortzwischenräume).

## Patentansprüche

1. Verfahren zum Erstellen eines ästhetisch ausgeglichenen Satzbildes durch Einstellen der Zeilenlängen mittels Einschieben von Leerstellen zwischen die Worte und Auswertung verschiedener Alternativen auf die Bewertung aller Zeilen eines Absatzes durch Zuteilung einer umso höheren Strafpunktezahl je mehr die Zeilen gestaucht oder gestreckt werden müssen, **dadurch gekennzeichnet**, daß
ständig oder fallweise auf elektronischem Wege unter Konstanthaltung der Strichstärke kondensierte und/oder expandierte Zeichen gegebenenfalls neben normalen zur Entlastung der Wortzwischenräume verwendet werden,
gegenüber den normalen Kerning-Abständen weitere Kerning-Abstände verwendet werden, wenn eine Zeile zu kurz ist, und engere Kerning-Abstände, wenn die Zeile zu lang ist,
beim Ermitteln der optimalen Zeilenumbruchstellen bereits berücksichtigt wird, daß expandierte und kondensierte Zeichenvarianten sowie normale, weitere und engere Kerning-Abstände zur Verfügung stehen.

2. Verfahren nach Anspruch 1, **dadurch gekennzeichnet**, daß in jeder Zeile nur eine Variante eines Zeichens genutzt wird.

3. Verfahren nach einem der vorhergehenden Ansprüche, **dadurch gekennzeichnet**, daß die Varianten jedes Zeichen so bewertet werden, daß Varianten einiger Zeichen bevorzugt vor denen anderer eingesetzt werden.

4. Verfahren nach den Ansprüchen 1 bis 3, **dadurch gekennzeichnet**, daß nach voreingestellten Bewertungskriterien und den Bewertungen der Zeichenvarianten für jede Zeile die optimale Kombination von kondensierten bzw. expandierten Zeichen, vergrößerten bzw. verkleinerten Zeichenabständen und vergrößerten bzw. verkleinerten Wortabständen ermittelt und gesetzt wird.

5. Verfahren nach den Ansprüchen 1 bis 4, **dadurch gekennzeichnet**, daß Trennzeichen wie Trennstrich, Satzpunkt und bestimmte Buchstaben wie A oder T so gesetzt werden, daß sie zum Teil über den Satzrand hinausragen, so daß eine optisch gerade Satzkante entsteht.

## Claims

1. Process for building a compensated typographic aspect by setting the line length by means of inserting empty space between words and evaluating various alternatives for assessing all lines in a paragraph by allocating a higher number of penalty points all the more the lines are compressed or stretched, **characterized in that**
constantly or case by case characters are used which are condensed and/or expanded with electronic methods maintaining a constant stroke width,
in comparision with normal kerning intervals, wider kerning intervals are applied if a line is too short and narrower kerning intervals are applied if a line is too long,
while determining optimal places for line breaks, it is already taken into consideration that expanded and condensed character variations as well as normal, widened and narrowed kerning intervals are available.

2. Process according to claim 1, **characterized in that** in each line only one variant of a character is used.

3. Process according to any of the preceding claims, **characterized in that** the variations of each character are assessed so that the variants of some characters are favored above variants of other characters.

4. Process according to claims 1 to 3, **characterized in that** for each line the optimal combination of condensed or expanded characters, enlarged or reduced character intervals, and enlarged or reduced interword space is determined and typeset according to pre-set assessment criterion and the assessment of the character variants.

5. Process according to claims 1 to 4, **characterized in that** hyphenation characters such as hyphens, periods and particular letters such as A or T are typeset partly projecting beyond the setting margin so that an optically straight composition edge arises.

## Revendications

1. Procédé pour établir un aspect de composition typographique esthétiquement équilibré par ajustement de la longueur de ligne à l'aide de l'insertion d'espaces vides entre les mots et évaluation de différentes alternatives en vue d'un jugement de toutes les lignes d'un paragraphe par attribution d'autant plus de points pénalisants que les lignes nécessitent être serrées ou étirées, **caractérisé par**
l'utilisation permanente ou occasionnelle de signes serrés et/ou étirés électroniquement en gardent constant l'épaisseur de trait, le cas échéant à coté de signes normaux, pour décharger les espaces entre les mots,
l'utilisation d'espacements de crénage plus importants que les espacements de crénage normaux, si une ligne est trop courte et d'espacements de crénage moins importants que les espacements de crénage normaux, si la ligne est trop longue,
la prise en considération du fait que des variantes serrées et étirées des signes ainsi que des espacements de crénage normaux, plus importants et moins important sont déjà à disposition lors de la recherche des endroit optimaux pour la césure des lignes.

2. Procédé selon la revendication 1, **caractérisé par** l'utilisation d'une seule variante d'un signe dans chaque ligne.

3. Procédé selon les revendications précédantes, **caractérisé par** l'évaluation des variantes de chaque signe de manière que les variantes de quelques signes soient utilisées de préférence par rapport à d'autres.

4. Procédé selon les revendications 1 à 3, **caractérisé par** la recheche de l'utilisation d'une combinaison optimale de signes serrés et/ou étirés, d'interlettrages augmentés et/ou réduits, d'espaces augmentés et/ou réduits entre les mots pour chaque ligne selon des critères d'évaluation pré définis et selon l'évaluation des variantes des signes.

5. Procédé selon les revendications n° 1 à 4, **caractérisé par** la disposition des signes de césure comme le tiret et le point, ainsi que de certains caractères comme le A ou le T de manière qu'ils dépassent partiellement les marges de mise en page générant ainsi que marge de mise en page optiquement droite.
